Europäisches Patentamt

European Patent Office

Office européen des brevets

(11) Publication number : **0 499 455 A2**

(12) **EUROPEAN PATENT APPLICATION**

(21) Application number : 92301154.8

(22) Date of filing : 12.02.92

(51) Int. Cl.⁵ : **B29D 30/00**

(30) Priority : **14.02.91 JP 40771/91**

(43) Date of publication of application :
**19.08.92 Bulletin 92/34**

(84) Designated Contracting States :
**DE ES FR GB IT**

(71) Applicant : **Bridgestone Corporation**
**1-1, Kyobashi 1-Chome Cyuo-Ku**
**Tokyo 104 (JP)**

(72) Inventor : **Okuyama, Koji**
**2-6-7, Arajuku-machi**
**Kawagoe-shi, Saitama-ken (JP)**

(74) Representative : **Silverman, Warren et al**
**HASELTINE LAKE & CO. Hazlitt House 28**
**Southampton Buildings Chancery Lane**
**London WC2A 1AT (GB)**

(54) **Tyre component member conveying apparatus.**

(57)    An apparatus (1) for conveying belt-like tyre component members (8), in particularly in the form of rubber belting, to a shaping drum (2) comprises a belt conveyor (6) having a driving drum (4) and a driven drum (5) with a continuous conveyor belt (6) installed thereon and driving control means (7) for the driving drum (4) which controls its rotational speed, the conveyor belt (6) having a reverse surface with at least one toothed portion (12,) which protrudes from the reverse surface at a predetermined position of the width thereof and extends without interruption in the lengthwise direction of the belt and a driving drum (4) which has teeth (14,) formed on the periphery thereof at a position or positions corresponding to the toothed portion(s) of the conveyor belt so as to mesh therewith.
    In preferred practice, there is provided in the conveyor belt (6) a plurality of air holes (11) in communication with an air chamber(9b) which is disposed under the conveyor belt (6). Air is supplied to and discharged from the air chamber (9b) by a blower (24).

EP 0 499 455 A2

This invention relates to an apparatus for conveying a belt-like tyre component member to a shaping drum in a tyre constructing process.

In manufacturing a tyre, a rubber belting member which is cut to a predetermined length and is to be a tyre component member is fed towards a shaping drum by a conveyor belt, and subsequently wound around an outer peripheral portion of the drum to be shaped (for example, see Japanese Laid-Open Patent Publication No. 02-22040 (1990)).

The belting member is, first of all, controlled as to its widthwise location on the conveyor belt by being sandwiched at both sides by, for example, a pair of guide members which are mutually displaceable to expand and contract the gap between them, then subsequently conveyed to the shaping drum by the conveyor belt. By driving the shaping drum and the belt conveyor at speeds at a constant ratio to each other, the belting member is would around the shaping drum, being appropriately elongated in a longitudinal direction, so that the front and rear ends of the belting member coincide with each other when wound around the drum.

However, the running speed of the conveyor belt is controlled by controlling the rotational speed of a driving drum (pulley) on which the conveyor belt is wound. Thus, when slippage occurs between the drum and the conveyor belt, the belt conveyor no longer runs at the predetermined speed no matter how the rotational speed of the driving drum is accurately controlled to meet the predetermined ratio with respect to the rotational speed of the shaping drum. As a result of this, there is an error in the amount of the belting member conveyed by the conveyor belt. Hence, the front end and the rear end of the belting member fail to coincide on the shaping drum, and thus a defect in the connecting region of the belting ends occurs.

Furthermore, should the conveyor belt shift in a widthwise direction with respect to the driving drum, it will be likely to result in a zigzag-shaped wound up condition even if the belting member is correctly located on the conveyor belt and conveyed to the shaping drum maintaining its proper alignment or configuration.

On the other hand, when the belting member is to be laterally constrained on the conveyor belt as explained in the foregoing description, it is desired that the belting member easily slides in a widthwise direction on the conveyor belt, and that when the belting member is conveyed, it is desired that the belting member does not slide in both the widthwise direction and the longitudinal direction with respect to the conveyor belt.

If the belting member does not slide uniformly on the belt along the whole contact surface between the belting member and the conveyor belt when the belting member is subject to lateral constraint, the lateral edge of the belting member is, for example, bent by being pushed over by the guide member. Thus, it is difficult to achieve an accurate positioning of the belting member.

Moreover, if the belting member shifts with respect to the conveyor belt in the widthwise direction when being conveyed, the feeding position to the shaping drum changes and, consequently, the belting member is wound in the zigzag shape. In contrast, if the belting member shifts with respect to the conveyor in the longitudinal direction, the extent of the above-described elongation varies and therefore the front end and the rear end fail to coincide when the belting member has been wound on the drum.

It is an object of this invention to provide a conveying apparatus of the aforesaid type in which lengthwise shifting and/or widthwise shifting of a length of belting is reliably avoided.

In accordance with the present invention, there is provided a conveying apparatus for conveying a tyre component in the form of a length of belting to a shaping drum by means of a belt conveyor having a driving drum and a driven drum with a continuous conveyor belt installed thereon and driving control means for the driving drum which controls its rotational speed, in which apparatus the conveyor belt has a reverse surface with at least one toothed portion which protrudes from the reverse surface at a predetermined position of the width thereof and extends without interruption in the lengthwise direction of the belt, the driving drum having teeth formed on the periphery thereof at a position or positions corresponding to the toothed portion(s) of the conveyor belt so as to mesh therewith.

When the conveyor belt of such a conveying apparatus is driven by the driving drum, teeth on the conveyor belt and the teeth of the driving drum mesh with each other. Hence, slippage between the conveyor belt and the driving drum during driving of the conveyor belt is prevented.

Accordingly, if the driving drum is driven and controlled by the driving control means so that there is a constant ratio between its rotational speed and the rotational speed of the shaping drum, the conveyor belt follows an accurate alignment at its predetermined speed and a tyre component member being fed by the conveyor belt is reliably wound as required so that the front end and the rear end coincide when winding on a drum is complete.

Since the toothed portion protrudes from the reverse or undersurface of the conveyor belt, if a guide member on the conveyor frame side of the apparatus is disposed to achieve sliding contact with a toothed portion side surface of the conveyor belt, the running direction of the belt is guided and the conveyor belt does not swing in the widthwise direction during its running. Hence winding of the tire component member on the shaping drum in a zigzag-configuration can be prevented.

In accordance with a preferred embodiment of the present invention, the conveyor belt is provided with a plurality of air holes extending therethrough and, an air chamber-providing means is disposed under and contacted by the conveyor belt and formed with holes in upper wall means thereof so as to communicate the air chamber interior with the air holes in the conveyor belt, the air chamber-providing means having associated air duct means for air supply thereto and air removal therefrom.

With such a form of apparatus, the locating of a tyre component member in the widthwise direction and the conveying thereof are carried out as follows. The tyre component member is fed onto the conveyor belt and air is supplied to the air chamber so as to blow out through the air holes of the conveyor belt which communicate the upper surface of the conveyor belt with the air chamber. Thus, the tyre component member is prevented from adhering to the belt conveyor.

When in this condition, the tyre component member is adjusted in its widthwise location by, for example, a pair of guide bars. Next, air is discharged from the air chamber to cause a negative pressure to prevail, whereby the tyre component member is sucked on to the conveyor belt and retained firmly thereon. At this stage, the guide bars are removed from both sides of the tyre component member and, disposed and held thus, the tyre component member is conveyed to the shaping drum by driving the conveyor belt.

Accordingly, a tyre component member can be located reliably at a predetermined position across the conveyor belt. After regulating location of the tyre component member and causing it to be held firmly on the conveyor belt to be conveyed to the shaping drum together with the conveyor belt, there is no loss of predetermined configuration of the tyre component member on the conveyor belt and there is no displacement of the tyre component member with respect to the conveyor belt as it is carried thereby.

Although the toothed portion extends continuously in the lengthwise direction of the belt conveyor to occupy at least one band extending across the belt conveyor, almost all of the reverse surface of the conveyor belt is formed as a flat surface. Therefore, this flat surface portion is preferably utilized to provide the air holes, and also the air chamber-providing means is preferably disposed to abut this flat surface portion in surface-surface contact. Moreover, such air chamber-providing means can be utilized as the guide member which slidably contacts the toothed portion lateral surface.

For a better understanding of the invention and to show how the same can be carried into effect, reference will now be made, by way of example only, to the accompanying drawings, wherein:

Figure 1 is a plan view showing an essential part of one tyre component member conveying apparatus embodying the present invention.

Figure 2 is a cross-sectional view taken along a line II-II in Figure 1, showing additionally associated air supplying means;

Figure 3 is a view showing the air supplying means as it is when supplying air to the main apparatus;

Figure 4 is a partial plan view showing a conveyor belt and an air chamber associated therewith;

Figure 5 is a perspective view showing an engaging portion of the conveyor belt and a driving drum;

Figure 6 is a cross-sectional view similar to that of Figure 2 but showing air supplying means according to another embodiment of the present invention; and

Figure 7 is a perspective view showing an engaging portion of the conveyor belt and a driving drum of this other embodiment.

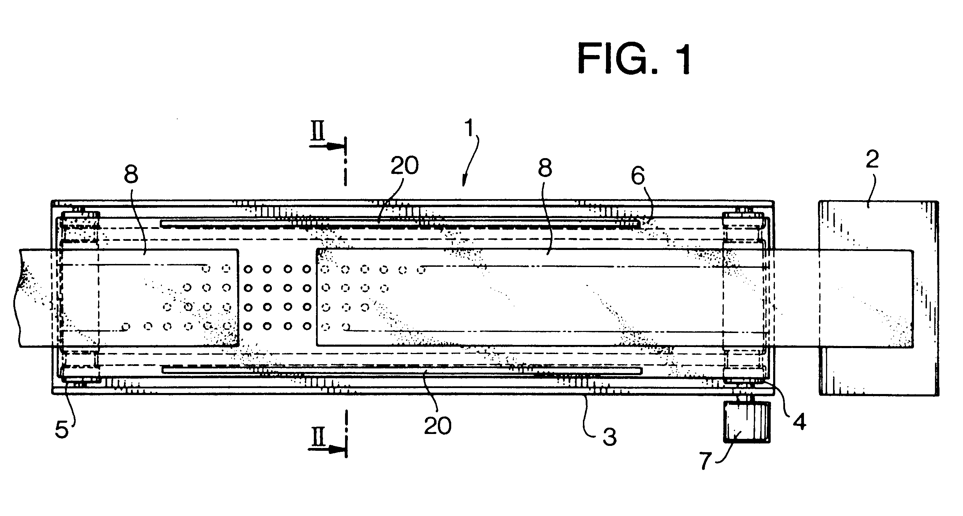

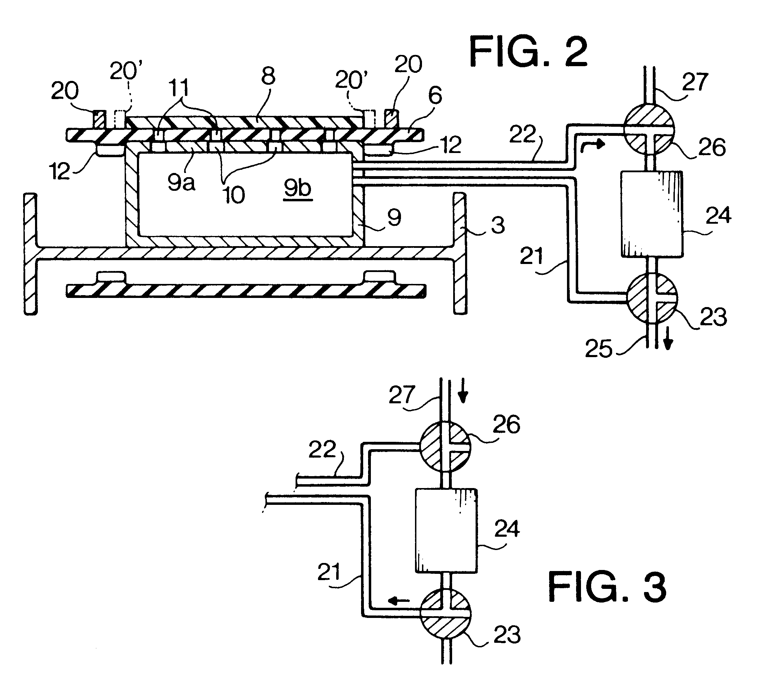

Referring now to Figures 1 and 2, reference numeral 1 denotes a belt conveyor, and reference numeral 2 denotes a shaping drum. At the front end of a conveyor frame 3 which constitutes the base of the belt conveyor 1 is a driving drum (head drum) 4 for the conveyor supported in a transverse direction. In like manner a rear end driven drum (tail drum) 5 is supported in a transverse direction. An endless conveyor belt 6 is installed between the driving drum 4 and the driven drum 5. When the driving drum 4 rotates, the conveyor belt 6 is driven in response to this rotation so that the upper running portion of the belt advances toward the shaping drum 2.

The driving drum 4 is driven by a motor (a driving control means) 7. The motor 7 is a pulse motor or a servo motor which is associated with electronic control means and is operated, as a result, with predetermined timing at a predetermined rotational speed to drive the driving drum 4 and also with its rotational speed controlled.

A belting member 8 which is a tyre component member made of unvulcanized rubber material is fed to the shaping drum 2 by the conveyor belt 6, and subsequently wound and adhered to the peripheral surface of the shaping drum 2 which is rotating. The belting member 8 is cut to be slightly shorter than the circumferential length of the shaping drum 2. By setting the speed of advance of the conveyor belt 6 to be slightly less than the circumferential speed of the shaping drum 2, the belting member 8 is wound around the shaping drum 6 in slightly elongated form so that front end and rear end of the belting member 8 coincide when winding on the drum is complete.

It is preferable to prepare beforehand the belting member by cutting it to a predetermined length. Alternatively, it is also preferable to feed a long continuous length of belting member on the belt conveyor 1 and in turn cut out the belting member 8 from this long continuous member while it is on this belt conveyor 1.

The belting member 8 has its position widthwise of the conveyor belt 6 regulated before it is fed to the shaping drum 2, so that is fed to the predetermined widthwise position on the shaping drum 2 by the conveyor belt 6. For this purpose, a pair of guide bars 20, 20 is disposed in parallel with each other so as to be located along both side edge portions of the conveyor belt 6. These guide bars 20, 20 are shiftable so as to approach each other or to depart from each other while staying parallel. As indicated by reference numerals 20′ in Figure 2, by sandwiching the belting member 8 from both sides between the guide bars 20, 20, the widthwise positioning of the belting member 8 is adjusted.

When the belting member 8 is in position in the widthwise direction in the aforementioned manner it is preferable that the belting member 8 is uniformly slidable by using the entire contact surface. However, when the belting member 8 is subsequently conveyed by the conveyor belt 6, if the belting member 8 shifts in the longitudinal direction with respect to the conveyor belt 6, even if the conveyor belt 6 advances at a predetermined speed, the amount of elongation of the belting member 8 varies and, therefore, the front end and the rear end of the belting member 8 fail to coincide with each other on the shaping drum 2.

Moreover, if the belting member 8 shifts in the widthwise direction with respect to the conveyor belt 6, the winding position on the shaping drum 2 varies and results in a condition where the belting member 8 is wound in a zigzag-configuration.

Therefore, there is provided a means which initially prevents the conveyor belt 6 and the belting member 8 from adhering to each other when the belting member 8 is undergoing adjustment of its widthwise positioning, and which later, in contrast, holds the belting member 8 on the conveyor belt 6 under suction so as not to allow slippage therebetween when the belting member 8 is being conveyed. For this purpose, there is provided, as shown in Figure 2, an air box 9 which contacts the reverse surface of the upper running portion of the conveyor belt 6 and extends along the belting member 8 on the belt.

The interior space of the air box constitutes an air chamber 9b. There is provided, on the one hand, a plurality of long holes 10 disposed at intervals over the length of its upper wall 9a and on the other hand, there is provided a plurality of air holes 11 on the predetermined portion of the conveyor belt 6 which is covered by the belting member 8. Thus, the air holes 11 communicate with the air chamber 9b through the long holes 10.

The air chamber 9b is connected with an air supply pipe 21 and an air discharge pipe 22. The air supply pipe 21 is connected to an outlet pipe 25 of a blower 24 through a three-way valve 23. The air discharge pipe 22 is connected to an inlet pipe 27 of the blower 24 through a three-way valve 26. If the three-way valves 23 and 26 are in the conditions as shown in the Figure 3, atmospheric air is supplied into the blower 24 through the inlet pipe 27 and, in turn, air compressed in the blower 24 is fed into the air chamber 9b through the air supply pipe 21. Therefore, the pressure in the air chamber 9b is increased.

Then, since air from the air chamber 9b emerges onto the upper surface of the conveyor belt 6 through the long holes 10 and the air holes 11, the belting member floats off from the upper surface of the conveyor belt 6 under the action of the air thereunder to prevent the belting member from adhering to the upper surface of the conveyor belt 6. If the three-way valves 23 and 26 are in the conditions shown in Figure 2, air in the air chamber 9b is discharged to the blower 24 through the discharge pipe 22 and is then discharged from the blower through the outlet pipe 25.

A negative pressure then obtains in the air chamber 9b. The effect of this negative pressure is that the belting member 8 is sucked on to the upper surface of the conveyor belt 6 as a result of the air withdrawal through the long holes 10 and the air holes 11 producing a suction effect. As a result, the belting member 8 is caused to adhere to the conveyor belt 6.

By providing such means, the belting member 8 is prevented from shifting with respect to the conveyor belt 6 when being conveyed. Accordingly, if the conveyor belt 6 runs at a predetermined speed without swinging over to right and left, the belting member 8 should be correctly wound on to the shaping drum 2. However, when slippage occurs between the conveyor belt 6 and the driving drum 4, the speed of advance of the conveyor belt 6 becomes less than the regular speed of advance determined by the rotational speed of the driving drum 4. As a result, the amount of elongation of the belting member 8 increases and, therefore, the front end and the rear end of the belting member 8 overlap on the shaping drum 2.

Moreover if the conveyor belt 6 causes a slippage of the driving drum 4 in the width-wise direction, the direction of advance of the conveyor belt 6 changes from being straight on to have a bearing in the right-and-left direction, which results in that the belting member 8 being wound on the shaping drum 2 in a zigzag-configuration.

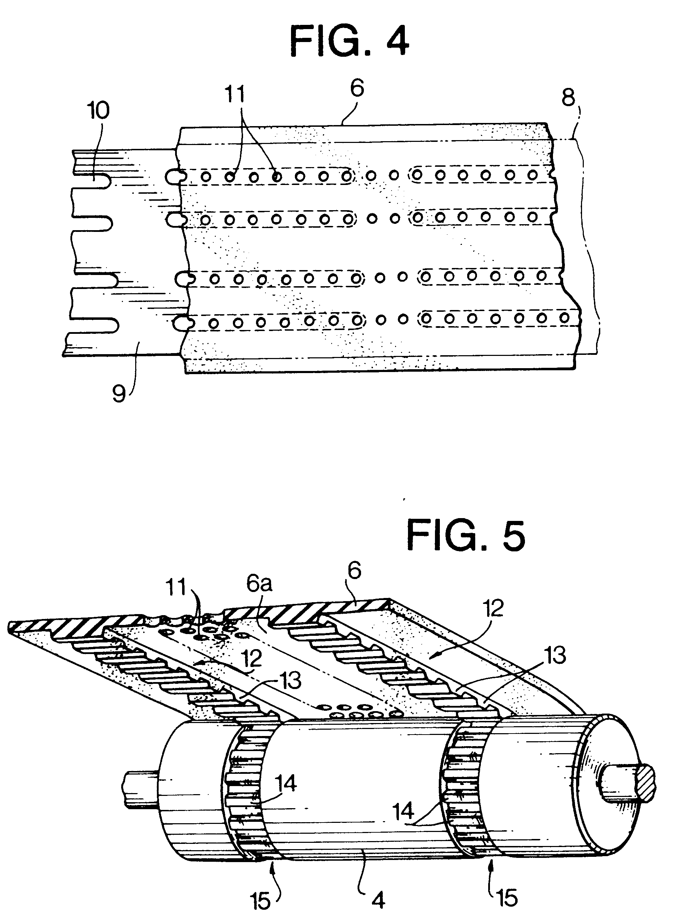

To prevent this, as shown more clearly in Figures 4 and 5, there is provided a toothed portion 12 extending on the reverse surface of the conveyor belt 6 along each side region thereof. This is seen particularly clearly in Figure 5. These toothed portions 12 each consists of a series of teeth 13 protruding from the reverse side of the conveyor belt 6, and extending continuously without a break in the longitudinal direction of the conveyor belt 6.

At the same time toothed portions 15 consisting of a series of teeth 14 are provided at outer peripheral regions of the driving drum 4 whose positions correspond to these toothed portions 12. The teeth 13 of the conveyor belt 6 and the teeth 14 of the driving drum 4 mesh with each other.

Accordingly, the conveyor belt 6 no longer slips with respect to the driving drum 4, and therefore, runs reliably at the predetermined speed. Thus, the front and rear ends of the belting member 8 being wound on to the shaping drum 2 correctly meet each other. The toothed portions 15 are formed in such a manner that their teeth 14 do not protrude above the outer peripheral surface of the driving drum 4 as shown in the drawing. Thus, the conveyor belt 6 is supported by the driving drum 4 in such a manner that the reverse side of the conveyor belt 6 makes contact with the driving drum 4 over almost all parts of its surface.

There remains a flat reverse surface portion 6a of the conveyor belt 6 between the toothed portions 12 and at both side regions of the belt 6. The air box 9 of Figure 2 makes contact with this flat reverse surface portion 6a. If the toothed portion 12 were interposed between the upper surface of the air box 9 and the conveyor belt 6, air from the air chamber 9b could leak to the side through a clearance between the teeth 13 of the toothed portion 12. Alternatively, outside air is introduced into the air chamber 9b through the clearance between the teeth 13. Consequently, it would become impossible to have the belting member 8 float off or be sucked onto the conveyor belt 6 under the influence of positive pressure or negative pressure. However, by setting the toothed portion 15 in the surface of the driving drum 4 so that the air box 9 makes good contact with the flat reverse portion 6a, the air box is able to perform its function sufficiently without being unduly influenced by any tendency of the toothed portion 12 to cause an air gap to exist between the belting 8 and conveyor belt 6.

Furthermore, the air box 9 is disposed such that both its lateral surfaces make sliding contact with the inner lateral surfaces of the toothed portions 12, as shown in Figure 2. The air box is fixed on the conveyor frame 3 and is elongated in the longitudinal direction of the conveyor belt 6. Thus, this air box 9 serves as a guide member which guides the running direction of the conveyor belt 6 through the agency of the toothed portion 12. Accordingly, the conveyor belt 6 is prevented from swinging to the right and left as it runs and the belting member 8 is correctly wound on the shaping drum 2 without causing a zigzag-configuration.

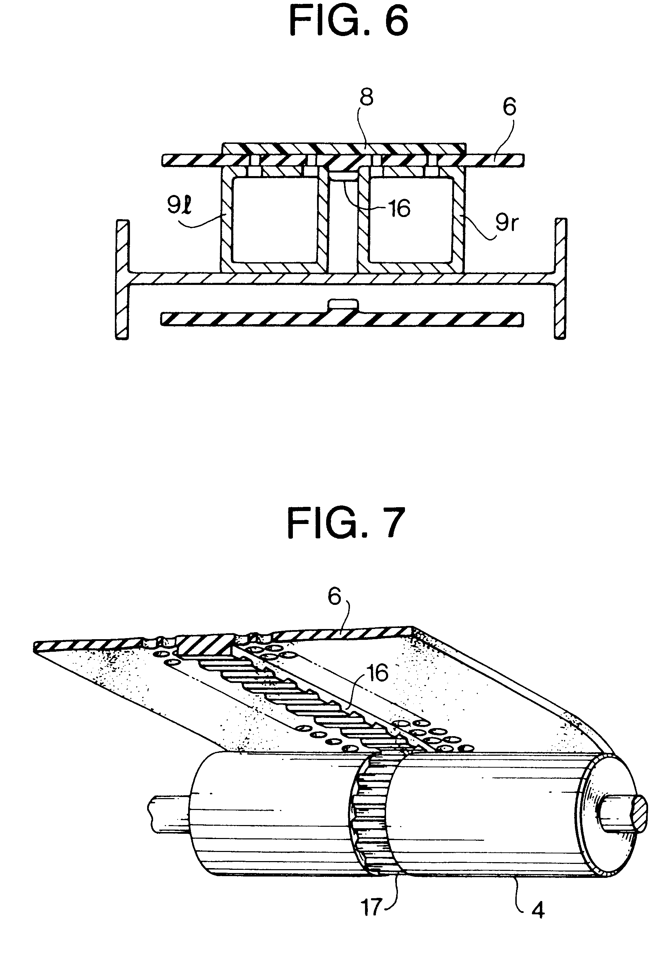

Figures 6 and 7 show another embodiment of the present invention. In this embodiment, there are formed parallel, spaced apart and right air chambers 9ℓ and 9r on the reverse side of the conveyor belt 6. Only one toothed portion 16 is provided on the conveyor belt 6, being located along the centre line thereof. Likewise, there is provided only one toothed portion 17 on the driving drum 4 being positioned mid-way between the ends thereof so as to engage with the toothed portion 16. The toothed portion 16 extends so as to lie between the right and left air chambers 9ℓ and 9r so as to be guided by them.

In the aforementioned embodiments, the use of air boxes as a guide members makes it possible to provide separate guide members which slidably contacts side surfaces of the toothed portions 12 or of the toothed portion 16. Moreover, when the tyre component conveying apparatus is to convey a belting member including a steel cord, it is possible to use a magnet in place of the air box. In this case, the magnet is disposed at the reverse side of they conveyor belt, and controlled to attract the belting member by moving the magnet close to the conveyor belt.

## Claims

1. A conveying apparatus for conveying a tyre component in the form of a length of belting (8) to a shaping drum (2) by means of a belt conveyor (6) having a driving drum (4) and a driven drum (5) with a continuous conveyor belt (6) installed thereon and driving control means (7) for the driving drum (4) which controls its rotational speed, **characterised by** a said conveyor belt (6) having a reverse surface with at least one toothed portion (12; 16) which protrudes from the reverse surface at a predetermined position of the width thereof and extends without interruption in the lengthwise direction of the belt and a said driving drum (4) which has teeth (14;, 17) formed on the periphery thereof at a position or positions corresponding to the toothed portion(s) of the conveyor belt so as to mesh therewith.

2. A conveying apparatus in accordance with Claim 1, which further comprises a guide member (9; 9ℓ, 9r) which is disposed to achieve sliding contact with a toothed portion (12'; 16) side surface of the conveyor belt (6) and guidance of the running direction of the conveyor belt (6).

3. A conveying apparatus in accordance with Claim 1 or 2, in which the conveyor belt (6) is provided with a plurality of air holes (11) extending therethrough an air chamber-providing means (9; 9ℓ, 9r) is disposed under and contacted by the conveyor belt (6) and formed with holes (10) in upper wall means thereof so as to communicate air chamber interior (9b) with the air holes (11) in the conveyor belt (6), the air chamber-providing means (9, 9ℓ, 9r) having associated air duct means (21,22) for air supply thereto and air removal therefrom.

4. A conveying apparatus in accordance with Claims 2 and 3, in which side surfaces of the air chamber-providing means (9; 9ℓ, 9r) are disposed to achieve sliding contact with side surfaces of the at least one toothed portion (12, 16) of the conveyor belt.

5. A conveying apparatus in accordance with Claim 4, in which the conveyor belt (6) has a pair of toothed portions (12) at opposite lateral regions thereof and a said air chamber-providing means (9)is disposed between these toothed portions.

6. A conveying apparatus in accordance with Claim 4, in which the conveyor belt (6) has a single toothed portion (16) positioned along the mid-line of the conveyor belt, and a pair of air chambers (9ℓ, 9r) is provided at opposite sides of the toothed portion (16).

7. A conveying apparatus in accordance with any preceding claim, in which the teeth (14, 17) of the driving drum (4) do not protrude above the outer peripheral surface of the driving drum.

FIG. 1

7

FIG. 2

FIG. 3

EP 0 499 455 A2

# FIG. 4

# FIG. 5

# FIG. 6

# FIG. 7